Europäisches Patentamt

European Patent Office

Office européen des brevets

(19)

(11) Publication number: **0 022 095**
**B1**

# EUROPEAN PATENT SPECIFICATION

(12)

(45) Date of publication of patent specification: **10.08.83**

(51) Int. Cl.³: **B 65 G 37/00**

(21) Application number: **80830042.0**

(22) Date of filing: **02.07.80**

(54) **Line for assembling objects, in particular rollers for crawler track vehicles.**

(30) Priority: **03.07.79 IT 4008479**

(43) Date of publication of application:
**07.01.81 Bulletin 81/1**

(45) Publication of the grant of the patent:
**10.08.83 Bulletin 83/32**

(84) Designated Contracting States:
**BE DE FR GB**

(56) References cited:
**DD - A - 133 935**
**DE - A - 2 036 023**
**FR - A - 2 329 550**
**US - A - 2 172 381**
**US - A - 3 604 554**
**US - A - 4 068 751**
**US - D - 2 388 283**

(73) Proprietor: **ITALTRACTOR I.T.M. S.p.A.**
**Via Modena, 152 Loc. Settecani**
**I-41014 Castelvetro (Modena) (IT)**

(72) Inventor: **Grilli, Walter**
**Via Monchio 30**
**Modena (IT)**
Inventor: **Villani, Mauro**
**Via Corrado Ricci, 8**
**Bologna (IT)**
Inventor: **Candrini, Giuliano**
**Via E. Fermi, 14**
**Castelvetro (Modena) (IT)**

(74) Representative: **Bonfreschi, Mario**
**Bugnion S.p.A. Viale Trento Trieste, 25**
**I-41100 Modena (IT)**

Courier Press, Leamington Spa, England.

Line for assembling objects, in particular, rollers for crawler track vehicles

The invention relates to a line for assembling objects—in particular, for rollers used in crawler track vehicles.

More specifically—though not exclusively—it can be gainfully employed for assembling rollers designed to support and guide tracks with which vehicles suited for movement over various types of terrain are fitted. One object of the invention is to create an assembly line in which provision is made for various assembly zones or stations, in the region of which the said objects are subjected to a plurality of assembly operations.

Another object of the invention is to create a line for assembling objects, and in particular, rollers, that is constructionally simple and highly automated. One advantage offered by the invention is a high rate of production.

This advantage and others are attained to by the invention described herein, which relates to a line for assembling objects, in particular rollers for crawler track vehicles, which comprises a plurality of assembly, manoeuvre and test stations or zones placed in ordered succession along a transportation line followed by said objects—viz, rollers; each of said assembly stations designed to accept a plurality of said objects or rollers, when instructed, from the section of the transportation line upstream and, simultaneously, to house the same for a determinate period of time, said plurality of rollers positioned in order to form a group on which a plurality of assembly operations are performed, allowing them subsequently to be transferred—on instruction—to the section of the transportation line downstream; said transportation line characterised in that it is provided with a plurality of detents for halting said objects or rollers in predetermined positions and comprises at least one horizontal conveyor device with idle rollers providing support to and causing said objects/rollers to move forward; said conveyor device comprising:— at least one chain conveyor consisting of identical, parallel and endless chains, each of which having a plurality of the idle rollers placed a short distance one from the next on parallel axes perpendicular to the direction of movement of said chain; the rollers which project outward from the upper conveying runs of said chains serving to define a horizontal rest-platform for said objects.

One preferred embodiment of the invention will now be described by way of example with the aid of the accompanying drawings, in which:

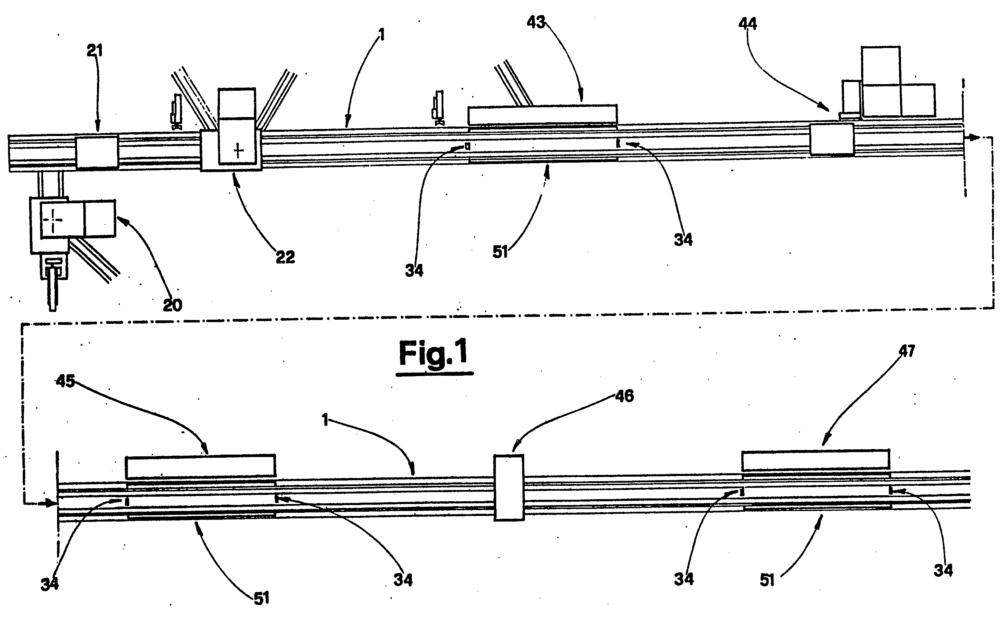

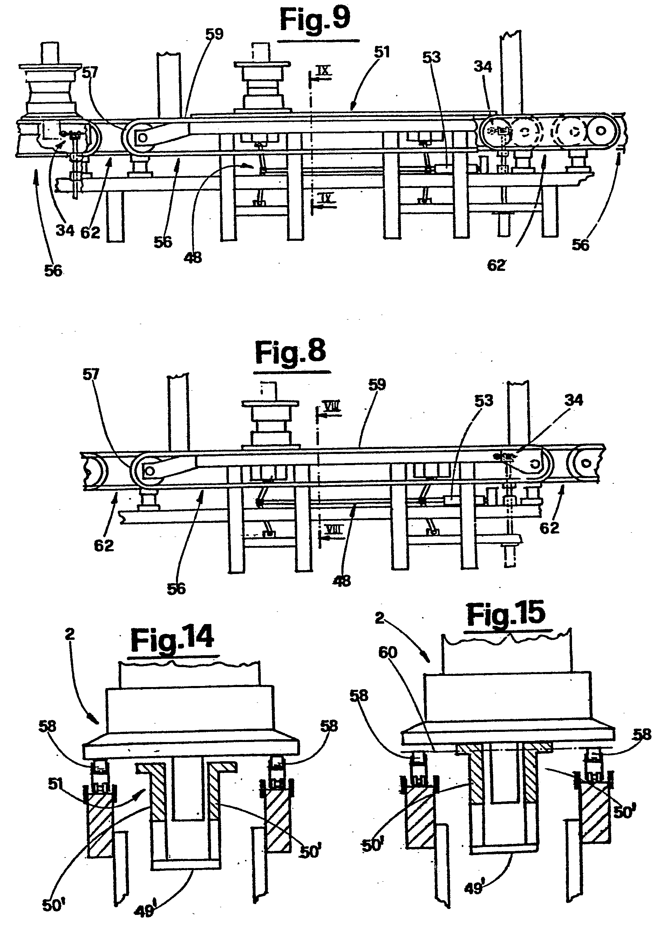

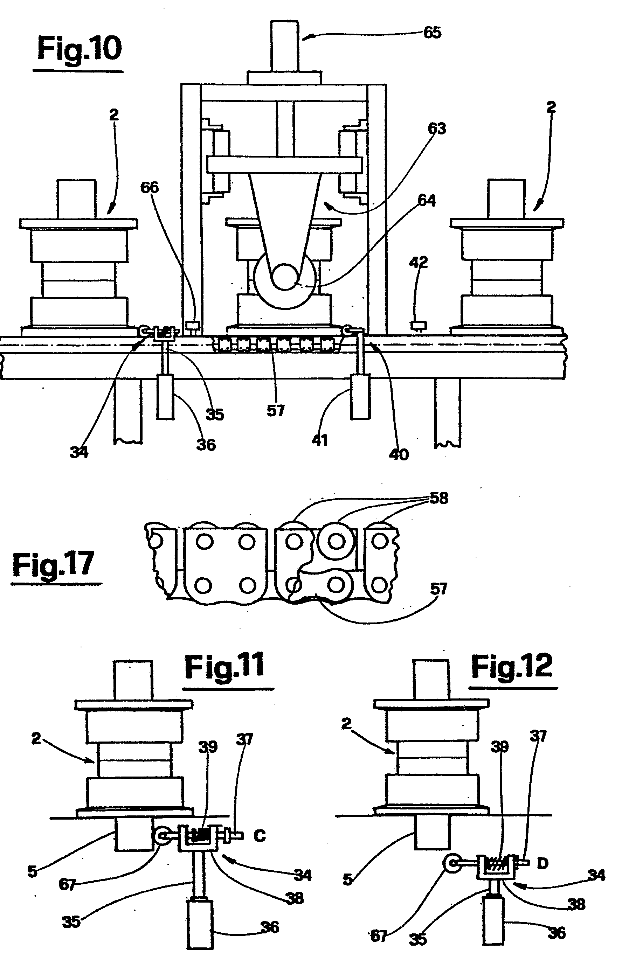

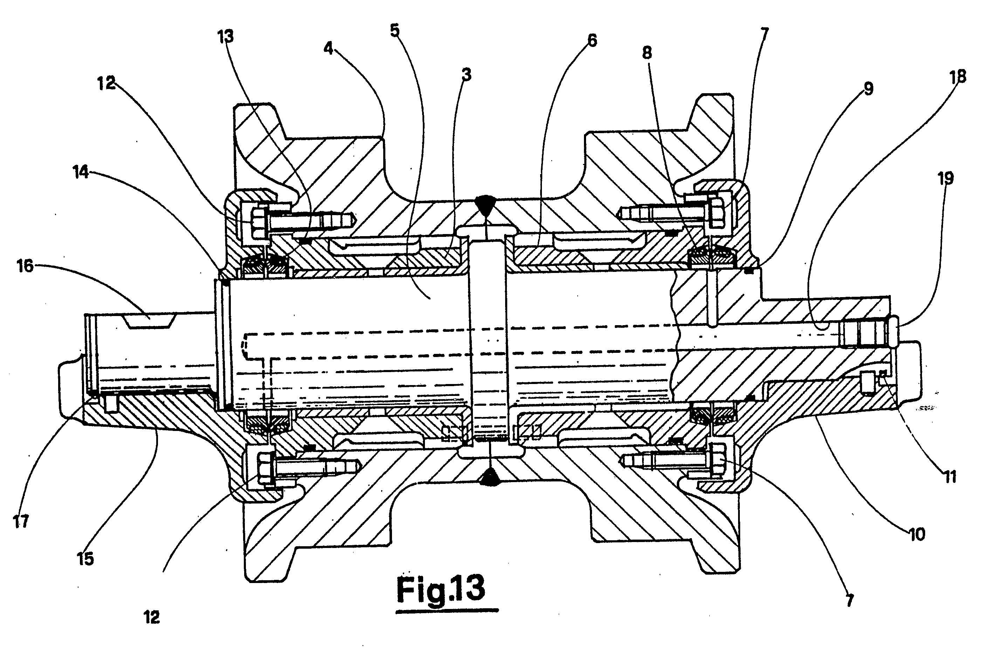

Fig. 1 shows a diagram of the roller assembly line to which the invention relates, seen in plan;

Figs. 8 and 9 show two vertical side elevations in part section and on an enlarged scale, illustrating two different working configurations for one and the same assembly station as per the embodiment of the line shown in Fig. 1;

Fig. 10 shows a diagram in vertical side-elevation of an automatic turnover device relative to the assembly line to which the invention relates;

Figs. 11 and 12 show a detail of the line in two different working configurations and on a larger scale;

Fig. 13 shows an axial section through a roller assembled on the line to which the invention relates;

Figs. 14 and 15 show large-scale diagrams of two sections through VIII—VIII and IX—IX in Figs. 8 and 9;

Fig. 17 shows a vertical side-elevation of a detail in Figs. 8, 9, 14 and 15, on an enlarged scale.

With reference to the above drawings, 1 denotes a transportation line forming part of a line for assembling rollers 2 of the type designed for supporting and guiding crawler tracks able to move over various types of ground.

The assembly of each single roller 2 takes place in the following main stages:

a) fitting—by the press—of a first hub to the cylindrical body 4 of the roller 2 while placed on a vertical axis;

b) overturning of said body 4 through 180°;

c) insertion of the spindle 5 and fitting by the press of the second hub 6 in symmetrical position with respect to hub 3;

d) securing of hub 6 to body 4 by means of screws 7, insertion of sealing gaskets 8 and 9, fitting of support 10 to the extremity of spindle 5, and insertion of the race 11;

e) overturning of the body 4 through 180°;

f) securing of hub 3 to body 4 by means of screws 12, insertion of sealing gaskets 13 and 14, fitting of support 15 to the extremity of spindle 5, fitting of key 16 and insertion of the race 17;

g) trial rotation of the assembled roller;

h) injection under pressure of lubricant into the coaxial hole 18 offered by spindle 5, and sealing of said hole 18 with a plug 19 and relative seal.

Stages a) and c) are carried out on presses 20 and 22 on one single roller at a time.

Provision is made on the transportation line 1 at a point between presses 20 and 22 for an automatic turnover device 21 which attends to stage b) automatically.

Provision is made further, downstream of said press 22 and along the path followed by the line 2, for an assembly station 43, a manoeuvring station consisting of an automatic turnover device 44, an assembly station 45, test station 46 and further assembly station 47—in the order stated—at which stages d), e), f), g) and h) are carried out.

Five or more rollers 2 may be accommodated simultaneously in the region of each assembly station 43, 45 and 47, the actual number depending on individual roller-dimensions, and a single operator carries out the corresponding assembly-stage on each roller. The transportation line 1 consists of a horizontal conveyor device with idle rollers providing support to said rollers 2 and causing them to move forward. Provision is made for two detents 34 along the line 1 which when placed in an upper position C are able to interact with any one of rollers 2 thereby impeding movement forward thereof.

In their lower position D, the detents 34 are unable to make contact either with the rollers 2 or with the extremities of spindles 5 aforesaid fitted thereto.

Each detent 34 is connected to the rod 35 of an operator cylinder 36 with vertical axis, able to control displacement of same from position C to position D, and viceversa.

Provision is made further, upstream and downstream—respectively—of each of said assembly stations 43, 45 and 47, for a detent 34 which may be controlled by the operator supervising the individual station. Further detents are positioned upstream of automatic turnover devices 21 and 44 and of test station 46. Each detent is furnished with a horizontal roller 67 mounted on a rod 37 linked elastically with relative body 38 by way of a spring, the body 38 itself being integral with the extremity of said rod 35. The roller 36 comes into contact with a given roller 2 being assembled—more precisely, with the lower protruding extremity of the spindle 5 mounted thereto. The conveyor device incorporated into the line 1 consists of a plurality of chain conveyors 56 placed one after the next in succession along the line. Each conveyor 56 consists of two parallel and identical endless chains 57, the outer side of each exhibiting a plurality of idle rollers 58 placed a short distance one from the next on axes parallel with and perpendicular to the direction of movement of the chain. The rollers 58 protruding outward from the upper conveying runs 59 of each conveyor 56 chain define a horizontal rest-platform 60 for rollers 2.

Provision is made in the region of each assembly station 43, 45 and 47 for a chain conveyor 56 and rest bench 51 comprising two parallel sections 50 supported by a frame 49.

A system of levers 48 moved by an operator cylinder 53 causes said sections 50 to be displaced from one position below the horizontal rest-platform 60 to another position higher than same, in the region of which said sections 50 project clearly with respect thereto—and viceversa.

In the said upper position, rollers 2 present at a relative station rest firmly (with their bases) on said sections 50 without coming into contact with the lower idle rollers 58 associated with the upper conveying runs 59 of chains 57.

Assembly comes about in the region of stations 43, 45 and 47 on the rollers 2 of whichever group happens to be lying on those sections 50 of bench 51 raised to maximum height, whilst the lower horizontal rest-platform 60 with its associated rollers 58 continues without interference on its own cycle of movement. Given the conditions thus described, the detent 34 upstream of the assembly station concerned continues to be engaged, and halts those rollers 2 accumulating on the section of the line preceding.

Once assembly has been completed on all rollers present at the station, the operator causes that detent 34 downstream of the station to disengage, and the bench 51 to return to its lower position.

Assembled rollers 2 are able to advance by virtue of the drive-action produced by movement in idle rollers 58 aforementioned. The detent 34 upstream is disengaged subsequently in order to allow forward movement of a fresh group of rollers 2 awaiting assembly.

Each of the chain conveyors 56 is operated independently, by its own motor.

Continuity of the horizontal rest-platform 60 between one chain conveyor 56 and the next is achieved by way of a small internal chain conveyor 62.

The movement forward of rollers 2 comes about in an unbroken fashion until the individual roller comes into contact with a detent 34 in position C. In fact, the chains 57 continue on their way whilst said roller 2 comes to a standstill, resting on the idle rollers which slide on beneath the base of same. With reference to automatic turnover devices 21 and 44 aforementioned, the single roller 2 is turned on the spot about its own horizontal axis—that is, its centre of gravity—by means of a device 63 equipped with gripping means 64.

Once said gripping means 64 have grasped the roller, the device 63 is displaced vertically by means of an operator cylinder 65. The gripping means 64 are then caused to rotate through 180° about a horizontal axis, after which the device 63 itself travels downward, whereupon the roller—now in upturned position on the idle rollers 58—is freed from the gripping means 64. Provision is made in the region of each automatic turnover device for a rigid locator member 40 having the function of positioning—precisely—the single roller 2 to be overturned with respect to said gripping means 64. The engagement/disengagement of the rigid locator member 40 in such a position as to intercept said roller 2 and prevent/allow movement thereof, is controlled by an operator cylinder 41, to whose rod said locator member is duly connected.

Provision is made further for a microswitch 66, located between detents 34 and individual devices 21 and 44. A second microswitch is located downstream of each said device.

The microswitch denoted 42 controls disengagement of that detent 34 lying upstream of the individual turnover device at the moment it interacts with the roller 2 overturned previously, allowing the latter to move away. At the same time, said microswitch 42 brings about re-engagement of the rigid locator-member 40.

Those rollers 2 waiting upstream of said turnover device are now able to advance, carried forward by the motion of said horizontal rest-platform 60 on which they lie.

Once past the detent 34, the first of said rollers comes up against microswitch 66 which re-engages the detent 34 in such a way as to arrest the roller 2 following immediately behind.

The roller 2 now by itself, stops against rigid locator member 40 once past the detent 34 and is duly turned over through 180°. Once the operation has been performed, rigid locator member 40 is disengaged once more and the cycle repeated.

## Claims

1. Line for assembling objects, in particular rollers (2) for crawler track vehicles, comprising a plurality of assembly, manoeuvre and test stations or zones placed in ordered succession along a transportation line (1) followed by said objects (2); each of said assembly stations (43, 45 and 47) designed to accept a plurality of said objects (2), when instructed, from the section of the transportation line upstream and, simultaneously, to house the same for a determinate period of time, said plurality of objects (2) positioned in order to form a group on which a plurality of assembly operations are performed, allowing them subsequently to be transferred—on instruction—to the section of said transportation line downstream; said transportation line (1) characterised in that it is provided with a plurality of detents (34) for halting said objects (2) in predetermined positions, and comprises: at least one horizontal conveyor device with idle rollers (58) providing support to and causing said objects (2) to move forward; said conveyor device comprising: at least one chain conveyor (56) consisting of identical, parallel and endless chains (57) each of which having a plurality of the idle rollers (58) placed a short distance one from the next parallel axes perpendicular to the direction of movement of said chain (57); said rollers (58) which project outward from the upper conveying runs (59) of said chains (57) serving to define a horizontal rest-platform (60) for said objects (2).

2. Assembly-line according to claim 1, wherein said conveyor device consists of a plurality of chain conveyors (56) placed in succession one after the next along said line (1) such that relative idle rollers (58) thereof define one single horizontal rest-platform (60); said conveyors (56) being operated one independently of the other.

3. Assembly-line according to claim 1 wherein provision is made for at least one said detent (34) to be placed immediately upstream, and at least one immediately downstream, of each of the stations aforesaid.

4. Assembly-line according to claim 1 wherein said manoeuvring stations comprise automatic devices for overturning said objects (2) lying on the line (1).

## Revendications

1. Ligne à assembler des objets, en particulier des rouleaux (2) destinés à des véhicules chenillés, comportant une pluralité de postes ou zones d'assemblage, de manoeuvre et d'essai, disposés selon une succession ordonnée le long d'une ligne de transport (1) suivie par lesdits objets (2); chacun desdits postes d'assemblage (43-45-47) étant destiné à recevoir, sur commande, du tronçon de ligne de transport en amont, une pluralité desdits objets et en même temps à loger, pendant une période de temps déterminée, cette pluralité d'objets (2) disposés en ordre à la file, de manière à former un groupe sur lequel on exécute une série d'opérations d'assemblage, et à en permettre, ensuite, sur commande, le transfert au tronçon de ligne de transport en aval; cette ligne de transport (1) étant caractérisé en ce qu'elle est munie d'une pluralité de butées destinées à arrêter lesdits objets (2) dans des positions prédéterminées et qu'elle comporte au moins un dispositif de transport horizontal à galets fous (58) arrangé de manière qu'il soutient et fait avancer les objets (2)ce dispositif transporteur comportant: au moins un transporteur à chaînes (56) qui se compose de deux chaînes égales, parallèles, sans fin (57) chacune desquelles a une pluralité de galets fous (58) disposés à une courte distance l'un de l'autre, à axes parallèles à la direction de mouvement des chaînes (57); les galets (58) saillant extérieurement des bras de transport supérieurs (59) desdites chaînes (57), étant destinés à définir un plan horizontal d'appui (60) pour lesdits objets (2).

2. Ligne selon la revendication 1, caractérisée en ce que ledit dispositif transporteur se compose d'une pluralitée de transporteurs à chaînes (56) disposés successivement l'un après l'autre le long de ladite ligne (1) de manière que ses galets fous respectifs (58) définissent un seul plan horizontal d'appui (60); ces transporteurs (56) étant actionnés de manière indépendante l'une de l'autre.

3. Ligne selon la revendication 1, caractérisée en ce qu'elle au moins prévoit que l'une desdites butées (34) soit disposée immédiatement en amont et l'une immédiatement en aval de chacun desdits postes.

4. Ligne selon la revendication 1, caractérisée en ce que lesdits postes de manoeuvre comportent des dispositifs automatiques susceptibles de enverser lesdits objets (2) qui se trouvent sur la ligne (1).

**Patentansprüche**

1. Band zum Zusammenbau von Gegenständen, besonders von Rollen (2) für Raupenfahrzeuge, enthaltend eine Anzahl von Stationen oder Abschnitten zur Montage, zum Umsetzen und zur Prüfung, die in einer geordneten Reihenfolge entlang einer Transportanlage (1) verteilt sind und von den genannten Gegenständen (2) durchlaufen werden, wobei jede der genannten Montagestationen (43, 45, 47) dazu dient, auf einen Befehl hin von dem vorangegangenen Transportabschnitt eine Anzahl der genannten Gegenstände (2) zu übernehmen und gleichzeitig und für eine vorbestimmte Zeit die genannte Anzahl von Gegenständen (2) festzuhalten, die ordentlich in einer Reihe angeordnet sind und eine Gruppe bilden, an der eine Anzahl von Montagearbeiten vorgenommen wird, und anschliessend auf einen Befehl hin die Weiterleitung an den nachfolgenden Transportabschnitt ermöglicht, dadurch gekennzeichnet, dass die Transportanlage (1) mit einer eigenen Vorschubbewegung und mit einer Anzahl von Feststellvorrichtungen für die genannten Gegenstände (2) in bestimmten Positionen versehen ist, und dass sie wenigstens eine horizontale Transportvorrichtung mit leerlaufenden Rollen (58) enthält, die dazu vorgesehen ist, die genannten Gegenstände oder Rollen (2) zu stützen und weiterzuleiten, wobei die genannten Transportvorrichtung wie folgt umfasst: Wenigstens einen Kettentransporter (56), der aus zwei gleichen, parallelen und ringförmig geschlossenen Ketten (57) besteht, von denen jede eine Anzahl von leerlaufenden Rollen (58) trägt, die in kurzem Abstand voneinander mit zu der Vorschubrichtung der Ketten parallel liegenden Achsen angeordnet sind, wobei die aus den oberen Transporttrums (59) der genannten Ketten (57) nach aussen herausragenden Rollen (58) dazu dienen, eine horizontale Auflagefläche (60) für die genannten Gegenstände (2) zu bilden.

2. Band nach Patentanspruch 1, dadurch gekennzeichnet, dass die genannte Transportvorrichtung aus einer Anzahl von Kettentransportern (56) besteht, die auifeinanderfolgend entlang dem genannten Band (1) angeordnet sind und zusammen mit den entsprechenden leerlaufenden Rollen (58) eine einzige Horizontale Auflagefläche (60) bilden, wobei die genannten Transporter (56) unabhängig voneinander angetrieben werden.

3. Band nach Patentanspruch 1, dadurch gekennzeichnet, dass es wenigstens eine der genannten Feststellvorrichtung (34) vorsieht, die sich unmittelbar am Anfang und am Ende der genannten Stationen befinden.

4. Band nach Patentanspruch 1, dadurch gekennzeichnet, dass die genannten Umsetzstationen automatische Vorrichtungen zum Wenden der genannten Gegenstände (2) enthalten, die auf dem genannten Band (1) liegen.

**Fig.1**

0 022 095

**Fig.9**

**Fig.8**

**Fig.14**

**Fig.15**

Fig.10

Fig.17

Fig.11

Fig.12

3

**Fig.13**

0 0 2 2 0 9 5